# EUROPÄISCHE PATENTSCHRIFT

(11) **EP 1 299 627 B1**
(45) Veröffentlichungstag und Bekanntmachung des Hinweises auf die Patenterteilung: **07.06.2006**
(21) Anmeldenummer: 01953855.2
(22) Anmeldetag: 04.07.2001
(51) Int. Cl.: F02D 9/10, F02B 31/08, F16K 1/22, F16K 27/02, B29C 45/14

(54) **SCHALTKLAPPE**
CONTROL VALVE
VOLET DE COMMANDE

(30) Priorität: 11.07.2000 DE 10033611
(43) Veröffentlichungstag der Anmeldung: 09.04.2003
(73) Patentinhaber: SIEMENS AKTIENGESELLSCHAFT, 80333 München (DE)
(72) Erfinder: KAISER, Werner, 93177 Altenthann (DE)
(86) Internationale Anmeldenummer: PCT/DE2001/002474
(87) Internationale Veröffentlichungsnummer: WO 2002/004798

(56) Entgegenhaltungen:
- DE-C- 19 717 347
- US-A- 2 529 572
- US-A- 3 595 523
- US-A- 3 901 964
- US-A- 5 715 782
- US-A- 5 979 401

## Beschreibung

Die Erfindung betrifft eine Schaltklappe gemäß dem Oberbegriff des Patentanspruchs 1. Schaltklappen sind insbesondere für den Einsatz in Ansaugvorrichtungen für Brennkraftmaschinen bekannt.

Aus der DE 197 17 347 C1 ist eine Schaltklappe mit einem Kunststoff-gespritzten Flügelkörper und einer Welle bekannt, die Prägenasen hat und die formschlüssig mit dem Flügelkörper verbunden ist. Die Schaltklappe ist längs ihrer Drehachse länglich ausgebildet und ist damit geeignet zum Einsatz in Ansaugvorrichtungen mit variabler Saugrohrlänge, wobei die Schaltklappe eine Ausnehmung zwischen zwei Saugrohren öffnet oder verschließt. Die Schaltklappe ist in Bezug auf ihre Drehachse parallel zu der Strömungsrichtung in den Saugrohren angeordnet und ragt somit nur mit einem geringen Querschnitt im geöffneten Zustand in die Strömung in den Saugrohren. Wird die Schaltklappe jedoch mit ihrer Drehachse senkrecht zur Strömungsrichtung der Luft in den Ansaugrohren angeordnet, um beispielsweise als Drallklappe einzelne Saugrohre hin zu einem Zylinder zu drosseln oder zu verschließen, so führt der Strömungswiderstand der Schaltklappe im geöffneten Zustand zu Strömungsverlusten in dem Saugrohr. Der Strömungswiderstand der Schaltklappe wird wesentlich bestimmt durch den maximalen Querschnitt der Schaltklappe in einer Ebene senkrecht zur Strömungsrichtung.

Die Aufgabe der Erfindung ist es, eine Schaltklappe so auszubilden, dass sie einen geringen Strömungswiderstand aufweist.

Die Aufgabe wird gelöst durch die Merkmale des unabhängigen Patentanspruchs. Vorteilhafte Ausgestaltungen der Erfindung sind in den Unteransprüchen gekennzeichnet.

Ausführungsbeispiele der Erfindung sind im Folgenden unter Bezugnahme auf die schematischen Zeichnungen näher erläutert. Es zeigen:
- Figur 1: eine Schaltklappe,
- Figur 2: eine um 90° gedrehte weitere Ansicht der Schaltklappe gemäß Figur 1,
- Figur 3: eine Welle der Schaltklappe gemäß Figur 1,
- Figur 4: eine um 90° gedrehte Ansicht der Welle gemäß Figur 3,
- Figur 5: einen Schnitt durch die Schaltklappe gemäß der Linie V V' und
- Figur 6: eine Brennkraftmaschine.

Elemente gleicher Funktion und Konstruktion werden figurenübergreifend mit den gleichen Bezugszeichen gekennzeichnet.

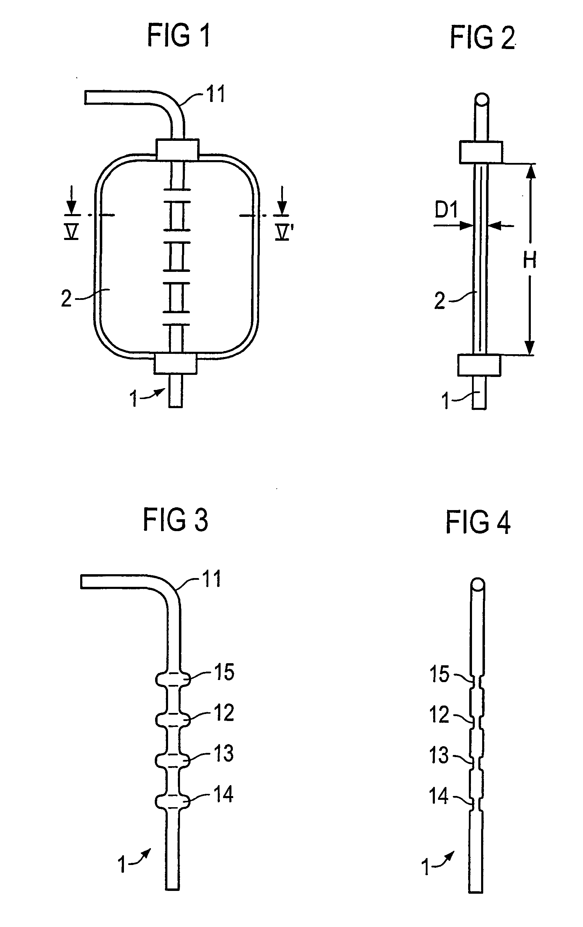

Eine Schaltklappe (Figur 1) hat eine Welle und einen Flügelkörper 2. Der Flügelkörper besteht aus Kunststoff und weist vorzugsweise randseitig eine Dichtung auf, die beispielsweise ein Elatomer ist. Die Welle 1 hat einen abgewinkelten Bereich 11, dies gewährleistet die Möglichkeit eines einfachen Verschwenkens zwischen einer Offenstellung und einer Schließstellung im eingebauten Zustand über ein nicht dargestelltes Gestänge, das von einem ebenfalls nicht dargestellten Stellglied angetrieben wird. Das Stellglied ist vorzugsweise eine Druckdose oder ein Elektromotor. Die Schaltklappe hat in einer Ebene senkrecht zu einer Strömungsrichtung 3 einen Querschnitt, der definiert ist durch das Produkt des Ausmaßes H des Flügelkörpers in Richtung der Drehachse der Welle 1 und des Ausmaßes D1 des Flügelkörpers senkrecht zur Drehachse der Welle (Figur 2). Die Welle 1 (Figur 3) hat mehrere Prägenasen 12, 13, 14, 15, bei denen der Querschnitt der Welle um ca. 50 % verringert ist und die plattenförmig ausgebildet sind und zwar parallel zu der Ebene des größten Querschnitts des Flügelkörpers 2. Der Flügelkörper 2 ist so ausgebildet, dass in Richtung einer Achse senkrecht zur Drehachse der Welle 1 er ein Ausmaß hat, das maximal dem Durchmesser der Welle entspricht. Ferner ist der Flügelkörper so ausgebildet, dass die Welle 1 nur im Bereich der Prägenasen 12 bis 15 vollständig mit dem Kunststoff des Flügelkörpers umspritzt ist. Dadurch wird erreicht, dass der für den Strömungswiderstand wesentliche Querschnitt des Flügelkörpers minimal ist. Das Ausmaß D1 des Flügelkörpers in Richtung der Drehachse der Welle entspricht somit nur in etwa dem Durchmesser der Welle. Und zugleich ist der Flügelkörper verdrehsicher mit der Welle 11 verbunden durch den Formschluss mit der Welle im Bereich der Prägenasen 12 bis 15.

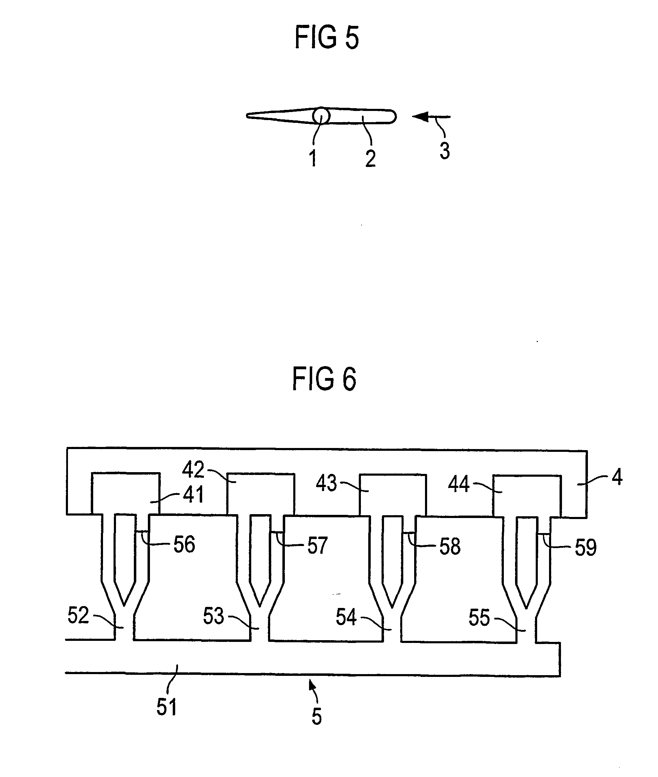

Ein besonders geringer Strömungswiderstand des Flügelkörpers 2 wird erreicht, wenn der Flügelkörper 2 Tragflächen-förmig ausgebildet ist, wie dies in Figur 5 dargestellt ist, wobei die Strömungsrichtung mit einem Pfeil 3 gekennzeichnet ist. Das Ausmaß D1 des Flügelkörpers senkrecht zur Drehachse der Welle 1 kann so auf 2 bis 3 mm reduziert werden, wobei die untere Grenze so gewählt werden muss, dass die notwendige Stabilität des Flügelkörpers an sich gewährleistet ist und auch günstiges verfügbares Material für die Welle aus Stahl zur Verfügung steht.

Figur 6 offenbart eine Brennkraftmaschine mit einem Motorblock 4 und einer Ansaugvorrichtung 5. Der Motorblock 4 weist Zylinder 41, 42, 43, 44 auf, die über Einlässe mit der Ansaugvorrichtung verbunden sind. Die Ansaugvorrichtung 5 hat einen Sammler 51, von dem Saugrohre 52, 53, 54, 55 hin zu den Einlässen der Zylinder 41 bis 44 abzweigen. In den Saugrohren sind teils Schaltklappen 56 bis 59 angeordnet, die gemäß den Figuren 1 bis 5 ausgebildet sind. Die Schaltklappen dienen beispielsweise zum Erzeugen einer Drallströmung in dem jeweiligen Zylinder 41 bis 44 der Brennkraftmaschine. Die Schaltklappen können jedoch beliebig zum Einsatz kommen, wie z.B. als Resonanzklappe oder als Drosselklappe.

## Patentansprüche

1. Schaltklappe mit einem Kunststoff-gespritzten Flügelkörper und einer Welle, die Prägenasen hat und die formschlüssig mit dem Flügelkörper verbunden ist, **dadurch gekennzeichnet, dass** der Flügelkörper in Richtung einer Achse senkrecht zur Drehachse der Welle ein Ausmaß hat, das maximal dem Durchmesser der Welle entspricht und die Welle nur im Bereich der Prägenasen vollständig mit dem Kunststoff des Flügelkörpers umspritzt ist.

2. Schaltklappe nach Anspruch 1, **dadurch gekennzeichnet, dass** der Flügelkörper tragflächenförmig ausgebildet ist.

3. Ansaugeinrichtung für eine Brennkraftmaschine mit mindestens einer Schaltklappe nach den vorstehenden Ansprüchen.

## Claims

1. Control valve with a plastic injection-moulded wing body and with a shaft which has embossed projections and which is connected positively to the wing body, **characterized in that** the wing body has, in the direction of an axis perpendicular to the axis of rotation of the shaft, a dimension which corresponds at most to the diameter of the shaft, and the shaft is injection-moulded around completely with the plastic of the wing body in the region of the embossed projections only.

2. Control valve according to Claim 1, **characterized in that** the wing body is designed in airfoil form.

3. Intake device for an internal combustion engine, with at least one control valve according to the preceding claims.

## Revendications

1. Volet de commutation comportant un corps de volet en matière plastique injectée et un arbre qui présente des cames matricées et qui est relié par conjugaison de forme au corps de volet,
**caractérisé en ce que** le corps de volet présente, dans la direction d'un axe perpendiculaire à l'axe de rotation de l'arbre, une dimension qui correspond au maximum au diamètre de l'arbre et **en ce que** l'arbre est, seulement dans la zone des cames matricées, complètement enrobé avec la matière plastique injectée du corps de volet.

2. Volet de commutation suivant la revendication 1, **caractérisé en ce que** le corps de volet est réalisé avec une forme de surface d'aile portante.

3. Dispositif d'admission pour un moteur à combustion interne, comportant au moins un volet de commutation selon les revendications précédentes.
